# EUROPEAN PATENT SPECIFICATION

(11) **EP 2 366 067 B1**
(45) Date of publication and mention of the grant of the patent: **23.01.2013**
(21) Application number: 09764044.5
(22) Date of filing: 15.10.2009
(51) Int. Cl.: F03G 7/08

(54) **ROAD ENERGY SYSTEM**
STRASSENENERGIESYSTEM
SYSTÈME UTILISANT L'ÉNERGIE D'UNE ROUTE

(30) Priority: 16.10.2008 TR 200807794
(43) Date of publication of application: 21.09.2011
(73) Proprietor: Ozdemir, Cenk, Sinop (TR)
(72) Inventor: Ozdemir, Cenk, Sinop (TR)
(74) Representative: Dericioglu, Ekin
(86) International application number: PCT/IB2009/054538
(87) International publication number: WO 2010/044071

(56) References cited:
- WO-A2-2006/120645
- US-A1- 2007 085 342
- US-A1- 2008 157 537

## Description

### Field of the Invention

The present invention relates to a road energy system (RES) which converts the pressure exerted to the road by means of the weights of the vehicles moving on the roads, into energy.

### Background of the Invention

Energy is a value which can not be measured directly and a power which is created to change the status of a physical mechanism. Kinetic energy, potential energy, thermal energy and light energy are different forms of the energy and used to explain all known natural events. Kinetic energy, which is one of the energy types, is the energy of the moving objects. The bigger the kinetic energy of an object is, the bigger work it does.

The United States patent document no. US6718760 discloses a system for generating electric energy from the kinetic energy of the vehicles. In the said system, a liquid is used and there is a pressure reservoir for the liquid. The said reservoir is disposed to the lower part of the asphalt and there is a chamber on which pressure is exerted in a vertical direction. In addition, there is a liquid line in order that the liquid can move in the system.

In the abovementioned United States patent document, the energy acquired from the flow of the liquid by the kinetic energy of the vehicles is transferred to the turbine and electric energy is obtained. In the said system a liquid fluid is used and the fluid leads to losses during the transmission of the pressure, which is exerted by the vehicles to the asphalt, to the generator and problems are encountered in generation of electric energy at desired level. Also in restoring the liquid flowing within the system, the energy is utilized which is obtained by the system and losses occur without generating electric energy from the energy obtained from the mechanism. US 2008/15737 is considered as the closest prior art to the subject-matter of claim 1.

### Summary of the Invention

The objective of the present invention is to provide a road energy system which generates electric energy via air pressure by means of using the weights of the vehicles moving on the road.

### Detailed Description of the Invention

"Road Energy System" realized to fulfill the objectives of the present invention is illustrated in the accompanying figures, in which:

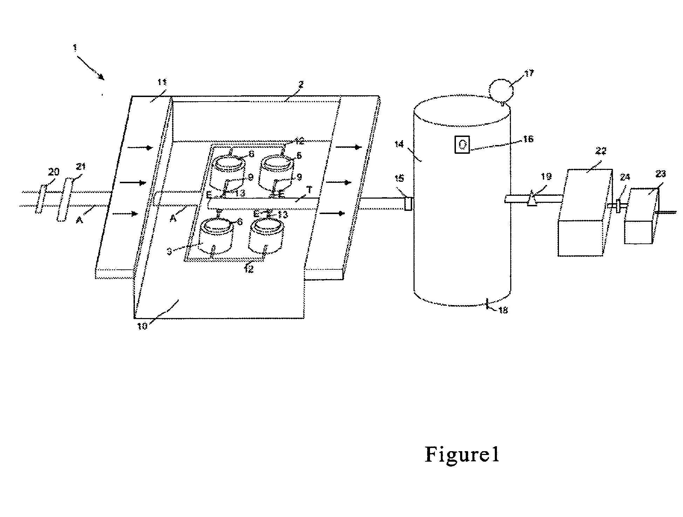

Figure 1 is the schematic view of the inventive road energy system.

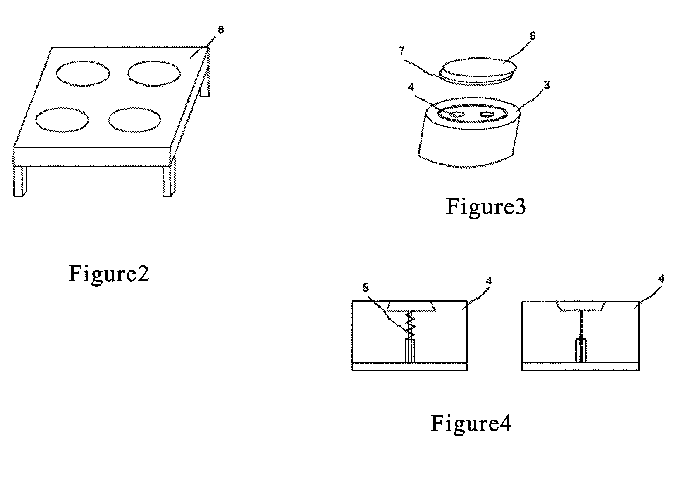

Figure 2 is the view of the mould which can be used in the inventive road energy system.
Figure 3 is the exploded view of the inventive pump.
Figure 4 is the cross sectional view of the valve.

The parts given in the figures are individually numbered where the numbers refer to the following:
1. Road energy system
2. Transfer trough
3. Pump
4. Valve
5. Spring
6. Hat (upper lid)
7. Connector
8. Mould
9. Connecting part
10. Filling and support material
11. Covering
12. Circulation pipes
13. Control device
14. Vessel
15. Cock
16. Pressure gauges
17. Air valve
18. Water outlet
19. Pressure regulator
20. Filter
21. Air dryer
22. Motor
23. Generator
24. Power transfer part

The inventive road energy system (1) involves
- at least one transfer trough (2) in which the components are disposed,
- at least one pump (3) which is disposed on the transfer trough (2),
- at least one valve (4) which allows air input/output and which is provided inside the pump (3),
- at least one spring (5) which is provided inside the valve (4) and which enables the valve (4) to open and close,
- at least one hat (upper lid) (6) which is provided on the upper part of the pump (3) and which enables the air to be pumped,
- at least one connector (7) which enables interconnection of the hat (upper lid) (6) and the pump (3),
- at least one mould (8) which enables stability of the pump (3),
- at least one connecting part (9) which is provided on the outlet of the pump (3) and which enables the air to be transmitted,
- condensed filling and support material (10) which are disposed into the transfer trough (2) in order to provide stability of the pumps (3),
- at least one covering (11) which maximizes the traffic safety of the components provided inside the transfer trough (2) by adapting to climate conditions,
- at least one collector (T) which transmits the air coming out from the pumps (3) to the air vessel (14),
- circulation pipes (12) which enables the air coming out from the pump (3) to reach the collector (T),
- at least one control device (13) which is disposed to the outlet of the pump (3) and which detects air loss,
- at least one air vessel (14) wherein the air carried by the circulation pipes (12) are collected,
- at least one cock (15) which can cut the connection between the air vessel (14) and the collector (T) on demand,
- at least one pressure gauge (16) which measures the pressure of the air provided inside the air vessel (14),
- at least one air valve (17) which discharges the excess air accumulating inside the air vessel (14),
- at least one water outlet (18) which is provided inside the air vessel (14) and when necessary enables to discharge the water accumulated inside the air vessel (14),
- at least one pressure regulator (19) which is disposed to the outlet of the air vessel (14) and which adjusts the pressure of the air that will be transmitted to the motor,
- at least one filter (20) which is attached to the main pipe (A) of the pumps (3) and used to clean the air,
- at least one air dryer (21) which will reduce the humidity ratio of the air that will be taken to the pumps (3) from the outside to zero and which will be attached to the main pipe (A),
- at least one motor (22) which is activated by the air coming out from the air vessel (14),
- at least one generator (23) which is triggered by the motor power and
- at least one power transfer part (24) which enables power transfer between the motor (22) and the generator (23).

The road energy system (1) is a system wherein the force brought out in consequence of the weights of the vehicles moving on the road, is converted into electric energy by means of air pumps (3).

In the said system (1), when the moving vehicle comes on to the covering (11) the system (1) stretches downwards by the vehicle's weigh. With this stretching, the air which is present between the hats (6) and the silon material and which is measured passes through the valves (4). Pressure value of the pressure air passing through the valves (4) is measured by means of the control devices (13) provided on the circulation pipes (12). The air in the circulation pipes (12) proceeds to the vessel (14) by means of the collector (T) and the vessel (14) stores the air. The air stored in the vessel (14) is transferred to the motor (22) over the pressure regulator (19). The pressure regulator (19) enables the air, which goes to the motor (22), to be stable. Upon the air activates the motor (22), the generator (23) activates as well and energy is generated. The power transfer parts (24) which are used between the generator (23) and the motor (22) can be parts such as belt, shaft, chain, etc.

In a preferred embodiment of the invention, safety valves (E) are disposed to the outlets of the pump (3) in order to prevent return of the air generated in the pumps (3) to them. The pumps (3) can be connected to the main pipe (A) directly or each pump (3) can take its own air from the outside as well, so as to be able to pump the required air to the system (1). In addition the valves (4) which are used inside the pumps (3) can be used as spring (5) or they can perform their function with the effect of atmospheric pressure without spring.

There is a channel inside the pump (3) in order to facilitate the transfer of the air generated by means of the hat (6), to the circulation pipes (12). Owing to the curved structure of the channel, the air reaches to the circulation pipes (12) without incurring any loss.

The pumps (3) are disposed on the transfer trough (2) in a sequential way. A filling and support material (10) is disposed under, on and between the pumps (3). The filling and support material (10) is such a structure that it will not be affected by snow and rainfall. Instead of the filling and support material (10) disposed under, on and between the pumps (3); pre-prepared moulds (8) having chambers into which the pumps (3) can be disposed can be used too. An extra layer can be disposed into the filling and support material (10) as well in order to prevent the water to pass below.

In another preferred embodiment of the present invention, the filling and support material (10) is produced such that there are chambers on it wherein the pumps (3) can enter. In addition a pre-prepared filling and support material (10) on which there are cavities can be used as well, in order to cover the pumps (3) disposed on the filling and support material (10). Also in another embodiment of the present invention, instead of the filling and support material (10) covering the pumps (3), the pumps (3) are covered by means of the special form given to the underside of the covering (11) and the required force can be applied to the pumps (3). There are cavities which enable the circulation pipes (12) to pass, in the said filling and support material (10).

The covering (11) which is used in the inventive road energy system (1) has a structure which protects it from slipperiness, heat and icing. Preferably feet (not shown in the figures) are used between the covering (11) and the filling and support material (10) for reabsorbing the mechanism stretching. The feet are manufactured from silon material or condensed rubber material. By means of the material structure, the feet act as a spring and push back the covering (11) by the help of spring force and atmospheric pressure. In addition the feet prevent the weight getting on the covering (11) to damage the hat (6) and thus the pump (3). The feet also help the vehicles to cross over the road energy system (1) as stable.

In the road energy system (1), clamps (not shown in the figures) are used in the interconnection of the connecting part (9) provided on the outlet of the pumps (3) and the circulation pipes (12). With the said clamps, taking the pump (3) out of the system is made easy in cases when the system fails.

In a further preferred embodiment of the present invention, hoses are used instead of the pumps (3) in air generation. The hoses are disposed in the same direction with vehicle's direction of movement. Number of hoses is arranged in accordance with the amount of air to be obtained. There are valves (4) in the inlets and outlets of the hoses as in the pumps (3). The air pressure which is composed by the vehicle passing over the hoses, is transmitted to the collector (T) by means of the circulation pipes (12). The air which is transmitted to the collector (T) is collected in the vessel (14) and the system (1) which is used to obtain energy is repeated.

In the road energy system (1) wherein a hose is used instead of a pump (3), a filling and support material (10) is used between the hoses (not shown in the figures). Similarly; there are cavities (not shown in the figures) in which the hoses can seat, on the filling and support material (10).

The inventive "Road Energy System (1)" is described by examples and illustrated with figures to facilitate better understanding thereof. However, the scope of the invention can not be limited to these examples and figures. The scope of the invention is defined by the claims.

## Claims

1. A road energy system (1) which is used in energy generation **characterized by**
- at least one transfer trough (2) in which the components are disposed,
- at least one pump (3) which is disposed on the transfer trough (2),
- at least one valve (4) which allows air input/output and which is provided inside the pump (3),
- at least one spring (5) which is provided inside the valve (4) and which enables the valve (4) to open and close,
- at least one upper lid (hat) (6) which is provided on the upper part of the pump (3) and which enables the air to be pumped,
- at least one connector (7) which enables interconnection of the upper lid (hat) (6) and the pump (3),
- at least one connecting part (9) which is provided on the outlet of the pumps (3) and which enables the air to be transmitted,
- condensed filling and support material (10) which are disposed into the transfer trough (2) in order to provide stability of the pumps (3),
- at least one covering (11) which maximizes the traffic safety of the components provided inside the transfer trough (2) by adapting to climate conditions,
- at least one collector (T) which transmits the air coming out from the pumps (3) to the air vessel (14),
- circulation pipes (12) which enables the air coming out from the pump (3) to reach the collector (T),
- at least one air vessel (14) wherein the air carried by the circulation pipes (12) are collected,
- at least one cock (15) which can cut the connection between the air vessel (14) and the collector (T) on demand,
- at least one pressure gauge (16) which measures the pressure of the air provided inside the air vessel (14),
- at least one air valve (17) which discharges the excess air accumulating inside the air vessel (14),
- at least one water outlet (18) which is provided inside the air vessel (14) and when necessary enables to discharge the water accumulated inside the air vessel (14),
- at least one pressure regulator (19) which is disposed to the outlet of the air vessel (14) and which adjusts the pressure of the air that will be transmitted to the motor,
- at least one motor (22) which is activated by the air coming out from the air vessel (14),
- at least one generator (23) which is triggered by the motor power and
- at least one power transfer part (24) which enables power transfer between the motor (22) and the generator (23).

2. A road energy system (1) according to Claim 1, **characterized by a** mould (8) which enables stability of the pumps (3) over the transfer trough (2).

3. A road energy system (1) according to the preceding claims, **characterized by** at least one control device (13) which is disposed to the outlet of the pumps (3) and which detects air loss.

4. A road energy system (1) according to the preceding claims, **characterized by** at least one air dryer (21) which will reduce the humidity ratio of the air that will be taken to the pumps (3) from the outside to zero and at least one filter (20) which is used to clean the air that will be taken to the pumps (3).

5. A road energy system (1) according to the preceding claims, **characterized by** a curved channel which is provided inside the pump (3) in order to facilitate the transfer of air generated by means of the hat (upper lid) (6) to the circulation pipes (12).

6. A road energy system (1) according to the preceding claims, **characterized by** filling and support material (10) which are premanufactured in order to cover the pumps (3) and on which there are cavities.

7. A road energy system (1) according to the preceding claims, **characterized by** a special formed covering (11) which cover the pumps (3) and which can apply the required force to the pumps (3).

8. A road energy system (1) according to the preceding claims, **characterized by** a hose (not shown in the figures) which is used instead of the pumps (3).

## Patentansprüche

1. Ein Straßenenergiesystem (1), das bei der Energieerzeugung eingesetzt wird, **umfasst:**
- zumindest eine Übertragungsrinne (2), in welcher die Bauteile angeordnet sind,
- zumindest eine Pumpe (3), die in der Übertragungsrinne (2) angeordnet ist,
- zumindest ein Anschlussteil (9), das am Ablauf der Pumpen (3) angeordnet ist und die Luftübertragung ermöglicht,
- verdichtete Aufschüttmasse sowie Trägermaterial (10), die in der Übertragungsrille (2) angeordnet sind, um die Stabilität der Pumpen (3) zu gewährleisten,
- zumindest eine Beschichtung (11), die die Verkehrssicherheit der Komponente innerhalb der Übertragungsrille (2) gewährleistet, indem sie sich den Klimabedingungen anpasst
- zumindest einen Sammler (T), der die von den Pumpen (3) kommende Luft in den Luftbehälter (14) weiterleitet,
- Umlaufröhre (12), die es ermöglichen, dass die aus der Pumpe (3) kommende Luft zum Sammler (T) gelangt,
- zumindest einen Luftbehälter (14), in dem die durch die Umlaufröhre (12) übertragene Luft aufgefangen wird,
- zumindest einen Hahn (15), der die Verbindung zwischen dem Luftbehälter (14) und dem Sammler (T), falls gewünscht, abstellt,
- zumindest einen Druckmesser (16), der den innerhalb des Luftbehälters (14) befindlichen Luftdruck abmisst,
- zumindest ein Luftventil (17), das den Überschuss an Luft, die sich innerhalb des Luftbehälters (14) ansammelt, entleert,
- zumindest einen Wasseraustritt (18), der innerhalb des Luftbehälters (14) vorgesehen ist und gegebenenfalls den Abfluss des innerhalb des Luftbehälters (14) angehäuften Wassers ermöglicht,
- zumindest einen Druckregler (19), der am Ausgang des Luftbehälters (14) angeordnet ist und den Druck des zum Motor zu übertragenden Lufts regelt,
- zumindest einen Motor (22), der durch die von dem Luftbehälter (14) kommenden Luft angeregt wird,
- zumindest einen Generator (23), der durch die Motorleistung angesteuert wird,
- zumindest ein Leistungsübertragungselement (24), das die Leistungsübertragung zwischen dem Motor (22) und dem Generator (23) ermöglicht,
und **gekennzeichnet durch**
- zumindest ein Ventil (4), das den Lufteintritt/-austritt ermöglicht und das innerhalb der Pumpe (3) vorgesehen ist,
- zumindest eine Feder (5), die innerhalb des Ventils (4) vorgesehen ist und die ermöglicht, dass das Ventil geöffnet bzw. geschlossen wird,
- zumindest einen oberen Deckel (Hut) (6), der im oberen Teil der Pumpe (3) vorgesehen ist und der es ermöglicht, dass die Luft gepumpt werden kann, und
- zumindest eine Anschlussklemme (7), die eine Schaltverbindung des oberen Deckels (Hut) (6) und der Pumpe (3) ermöglicht,

2. Ein Straßenenergiesystem (1) gemäß Anspruch 1, **gekennzeichnet durch** einen Formkörper (8), der die Stabilität der Pumpen (3) auf der Übertragungsrille Möglich macht.

3. Ein Straßenenergiesystem (1) gemäß den vorangehenden Ansprüchen, **gekennzeichnet durch** mindestens ein Steuergerät (13), das am Austritt der Pumpen (3) angeordnet ist und den Luftverlust erfasst,

4. Ein Straßenenergiesystem (1) gemäß den vorangehenden Ansprüchen, **gekennzeichnet durch** mindestens einen Lufttrockner (21), der den Feuchtigkeitsgehalt des vom Außen in die Pumpen (3) einzutretenden Lufts verringert und zumindest einen Filter (20), der eingesetzt wird um die in die Pumpen (3) einzutretenden Luft zu reinigen.

5. Ein Straßenenergiesystem (1) gemäß den vorangehenden Ansprüchen, **gekennzeichnet durch** einen kurvenförmigen Kanal, der innerhalb der Pumpe (3) vorgesehen ist, um die Übertragung des mittels des Huts (Oberdeckel) (6) erzeugten Lufts zu den Umlaufröhren (12) zu erleichtern.

6. Ein Straßenenergiesystem (1) gemäß den vorangehenden Ansprüchen, **gekennzeichnet durch** Aufschüttmasse und Trägermaterial (10), die vorher hegestellt sind um die Pumpen (3) zu bedecken und auf welchen Aussparungen vorgesehen sind.

7. Ein Straßenenergiesystem (1) gemäß den vorangehenden Ansprüchen, **gekennzeichnet durch** eine speziell geformte Abdeckung (11), die die Pumpen abdeckt (3) und die erforderliche Kraft auf die Pumpen (3) ausüben kann.

8. Ein Straßenenergiesystem (1) gemäß den vorangehenden Ansprüchen, **gekennzeichnet durch** einen Schlauch (in den Figuren nicht gezeigt), der anstelle der Pumpen (3) eingesetzt wird.

## Revendications

1. Un système routier d'énergie (1) utilisé pour la production d'énergie, **caractérisé par**
- au moins un conduit de transfert (2) dans lequel sont disposées les pièces,
- au moins une pompe (3) disposée sur le conduit de transfert (2),
- au moins une valve (4) permettant l'entrée/la sortie d'air et étant fournie dans la pompe (3),
- au moins un ressort (5) fourni dans la valve (4) et permettant à la valve (4) de s'ouvrir et se fermer,
- au moins un couvercle (chapeau) supérieur (6) fourni sur la partie supérieure de la pompe (3) et permettant le pompage de l'air,
- au moins un connecteur (7) permettant l'interconnexion du couvercle (chapeau) supérieur et la pompe (3),
- au moins une pièce de raccordement (9) fournie sur la sortie des pompes (3) et permettant la transmission de l'air,
- matériau condensé de remplissage et de support (10) disposé dans le conduit de transfert (2) afin de fournir la stabilité des pompes (3),
- au moins un revêtement (11) maximisant la sécurité des pièces fourni à l'intérieur de conduit de transfert (2) en adaptant aux conditions climatiques,
- au moins un connecteur (T) transmettant l'air sortant des pompes (3) au récipient d'air (14),
- tubes de circulation (12) permettant à l'air sortant de la pompe (3) d'arriver au collecteur (T),
- au moins un récipient d'air (14) dans lequel est collecté l'air porté par les tubes de circulation (12),
- au moins un robinet (15) pouvant couper la connexion entre le récipient d'air (14) et le collecteur (T) sur demande,
- au moins un manomètre (16) mesurant la pression de l'air fourni à l'intérieur de récipient d'air (14),
- au moins une valve d'air (17) déchargeant l'air excès accumulé à l'intérieur de récipient d'air (14),
- au moins un régulateur de pression (19) disposé à la sortie du récipient d'air (14) et ajustant la pression de l'air à transmettre au moteur,
- au moins un moteur (22) activé par l'air sortant du récipient d'air (14),
- au moins un générateur provoqué par la puissance de moteur, et
- au moins une pièce de transfert de puissance (24) permettant le transfert de puissance entre le moteur (22) et le générateur (23).

2. Un système routier d'énergie (1) selon la revendication 1, **caractérisé par** un moule (8) permettant la stabilité des pompes (3) sur le conduit de transfert (2).

3. Un système routier d'énergie (1) selon l'une des revendications précédentes, **caractérisé par** au moins un dispositif (13) disposé à la sortie des pompes (3) et détectant la perte d'air.

4. Un système routier d'énergie (1) selon l'une des revendications précédentes, **caractérisé par** au moins un déshydrateur d'air (21) qui réduira le taux d'humidité de l'air qui sera reçu par pompes (3) de l'extérieur au zéro et au moins un filtre (20) utilisé pour nettoyer l'air qui sera reçu par les pompes (3).

5. Un système routier d'énergie (1) selon l'une des revendications précédentes, **caractérisé par** un conduit courbé fourni à l'intérieur de la pompe (3) afin de faciliter le transfert de l'air produit à travers le chapeau (couvercle supérieur) (6) aux tubes de circulation (12).

6. Un système routier d'énergie (1) selon l'une des revendications précédentes, **caractérisé par** le matériau de remplissage et de support (10) préfabriqué afin de couvrir les pompes (3) et sur lequel des cavités existent.

7. Un système routier d'énergie (1) selon l'une des revendications précédentes, **caractérisé par** un revêtement (11) à forme spéciale couvrant les pompes (3) et pouvant appliquer la force requise aux pompes (3).

8. Un système routier d'énergie (1) selon l'une des revendications précédentes, **caractérisé par** un tuyau (n'apparaît pas dans les figures) utilisé au lieu des pompes (3).
